Europäisches Patentamt

European Patent Office

Office européen des brevets

(11) Veröffentlichungsnummer : **0 060 801**
**B1**

(12) # EUROPÄISCHE PATENTSCHRIFT

(45) Veröffentlichungstag der Patentschrift :
07.08.85

(51) Int. Cl.⁴ : **G 05 D 23/19, F 24 D 19/10**

(21) Anmeldenummer : **82730016.1**

(22) Anmeldetag : **23.02.82**

(54) **Regelvorrichtung für Heizungsanlagen.**

(30) Priorität : 16.03.81 DE 3110730
31.03.81 DE 3113521

(43) Veröffentlichungstag der Anmeldung :
22.09.82 Patentblatt 82/38

(45) Bekanntmachung des Hinweises auf die Patenterteilung : 07.08.85 Patentblatt 85/32

(84) Benannte Vertragsstaaten :
AT BE CH DE FR LI NL

(56) Entgegenhaltungen :
DE-B- 1 105 584
FR-A- 2 449 923
GB-A-   540 087
POLYTECHNISCH TIJDSCHRIFT ELEKTROTECH-
NIEK ELEKTRONICA, Band 33, Nr. 7, Juli 1978, Seiten
373-381, Den Haag, NL. H.TH. KLEIN WOLTERINK:
"Energiebesparing en besturing van de huisinstallatie met een microprocessor"
IBM TECHNICAL DISCLOSURE BULLETIN, Band 20,
Nr. 8, Januar 1978, Seiten 2981-2984, New York, USA
R.J. COUGHLIN: "Computerized control of chilled
water system"

(73) Patentinhaber : **Siemens Aktiengesellschaft**
**Berlin und München Wittelsbacherplatz 2**
**D-8000 München 2 (DE)**

(72) Erfinder : **Anders, Horst-Günther, Ing. grad.**
**Hohenzollerndamm 193**
**D-1000 Berlin 31 (DE)**
Erfinder : **Nusche, Georg**
**Strasse 472 Nr. 20**
**D-1000 Berlin 52 (DE)**
Erfinder : **Schwerdtner, Horst, Dipl.-Ing.**
**Motzstrasse 76**
**D-1000 Berlin 30 (DE)**
Erfinder : **Grieger, Peter, Dipl.-Ing.**
**Am Wald 27**
**D-7500 Karlsruhe (DE)**

**Beschreibung**

Die Erfindung bezieht sich auf eine Regelvorrichtung für Heizungsanlagen mit einer elektronischen Regelschaltung, an deren einem Eingang eine von der Vorlauftemperatur eines Heizmittels gesteuerte Regelgröße anliegt, an derem zweiten Eingang eine über eine Bewertungsschaltung geführte und somit bewertete, von der Außentemperatur des die Heizungsanlage umgebenden Gebäudes abhängige Führungsgröße anliegt, an deren drittem Eingang zur Vorgabe einer gewünschten Innentemperatur des die Heizungsanlage umgebenden Gebäudes eine von einem Solltemperaturgeber entsprechend der Solltemperatur gebildete Sollgröße anliegt und an deren Ausgang eine auch von einer Solltemperatur abhängige Stellgröße zur Veränderung der Vorlauftemperatur des Heizmittels zur Verfügung steht.

Bei einer bekannten Regelvorrichtung dieser Art (Siemens Katalog MP 36, Seiten 4/1 bis 4/3, 1979) sind zwei Temperaturgeber vorhanden, von denen der eine so angeordnet ist, daß er eine der Außentemperatur des die Heizungsanlage umgebenden Gebäudes entsprechende Größe zur Bildung der unbewerteten Führungsgröße abgibt, und von denen der andere eine der Vorlauftemperatur des Heizmittels entsprechende Größe, aus der die Regelgröße gebildet wird, erzeugt. Die elektronische Regelschaltung ist darüber hinaus mit dem Ausgangssignal eines Sollwertstellers beaufschlagt, mit dem eine gewünschte Innentemperatur des Gebäudes eingestellt werden kann. Die Stellgröße am Ausgang der elektronischen Regelschaltung ist auf ein Stellglied geführt, welches das Heizmittel derart steuert, daß sich eine gewünschte Vorlauftemperatur und somit die gewünschte Heizwirkung der Heizungsanlage ergibt.

Die Bewertungsschaltung dieser bekannten Regelvorrichtung weist Einsteller auf, mit denen die Parameter der Bewertung manuell verändert werden können. Diese Parameter sind Parameter einer Heizkurve, die bei der bekannten Regelvorrichtung den Verlauf der Vorlauftemperatur in Abhängigkeit von der Außentemperatur darstellt. Durch Änderung eines Parameters wird hier eine Parallelverschiebung der Heizkurve (Niveauverschiebung) bewirkt. Ein weiterer veränderlicher Parameter stellt die Steigung der Heizkurve dar, die das Verhältnis einer Änderung der Außentemperatur zu einer Änderung der Vorlauftemperatur beinhaltet.

Die manuelle Einstellung dieser Parameter ist insofern schwierig, als die Zeitkonstanten bei Erwärmung oder Abkühlung des Gebäudes, der äußeren Umgebung des Gebäudes oder des Heizmittels relativ groß sind und somit eine zeitaufwendige Einstellung durch fachkundiges Bedienungspersonal notwendig ist. Eine Veränderung der Einsteller durch den Benutzer der Heizungsanlage ist auch schwierig, da die subjektiven Temperaturempfindungen bei Erwärmung oder Abkühlung im Innern des Gebäudes zu falschen Einstellung bzw. zu Übersteuerungen der Heizungsanlage führen können, was zusätzlich zu dem großen Zeitaufwand zu einem unnötig hohen Verbrauch von Heizenergie führt. Eine Übereinstimmung der Solltemperatur mit der tatsächlichen Temperatur im Innern des Gebäudes ist nur schwer zu erreichen, da störende Temperatureinflüsse im Innern des Gebäudes nur innerhalb eines relativ großen Zeitraumes ausgeregelt werden können.

Der Erfindung liegt somit die Aufgabe zugrunde, eine Regelvorrichtung für Heizungsanlage zu schaffen, mit der eine optimale Heizwirkung der Heizungsanlage in relativ kurzer Zeit bei einfacher Bedienung der Regelvorrichtung erreichbar ist.

Zur Lösung dieser Aufgabe ist bei einer Regelvorrichtung der eingangs angegebenen Art erfindungsgemäß ein vierter Eingang der elektronischen Regelschaltung mit dem Ausgang eines Führungsreglers verbunden, an dessen einem Eingang eine von der Innentemperatur des die Heizungsanlage umgebenden Gebäudes beeinflußte weitere Führungsgröße anliegt und dessen anderer Eingang mit der Sollgröße beaufschlagt ist, wobei das Ausgangssignal des Führungsreglers von der Differenz zwischen der weiteren Führungsgröße und der Sollgröße abhängig ist; der Ausgang des Führungsreglers ist mit einem Eingang einer Optimierungsschaltung verbunden, deren anderer Eingang mit einem Eingang der Bewertungsschaltung verbunden ist und deren Ausgang auf einen anderen Eingang der Bewertungsschaltung geführt ist, wobei das Signal am Ausgang der Optimierungsschaltung in Abhängigkeit vom Ausgangssignal des Führungsreglers und von der unbewerteten einen Führungsgröße derart auf die Bewertungsschaltung einwirkt, daß die Bewertung der einen Führungsgröße verändert wird.

Vorteilhaft ist die erfindungsgemäße Regelvorrichtung insofern, als mit dem Führungsregler auf einfache Weise eine Regeldifferenz aus der mit dem Solltemperaturgeber eingestellten Sollgröße und der von der Innentemperatur abhängigen weiteren Führungsgröße gebildet werden kann. Diese Regeldifferenz bewirkt einerseits durch seine Aufschaltung eine direkte Änderung der Stellgröße am Ausgang der Regelschaltung und andererseits, abhängig von Betrag und Vorzeichen der Regeldifferenz, eine Optimierung der Regelvorrichtung mittels der Optimierungsschaltung. Liegt eine Regeldifferenz am einen Eingang der Optimierungsschaltung an, die ausreichend ist zur Aktivierung der Optimierungsschaltung, so wirkt die Optimierungsschaltung auf die Bewertungsschaltung derart ein, daß entweder die Steigung der Heizkurve oder das Niveau der Heizkurve verändert wird. Die somit veränderliche Bewertung der einen Führungsgröße durch die Bewertungsschaltung führt zu einer Änderung der Parameter der Heizkurve und somit zur Optimierung der Regelvorrichtung. Somit ist z. B. durch eine Erhöhung der Steigung der Heizkurve sichergestellt, daß ein steilerer Anstieg der Vorlauftemperatur des Heizmittels und somit auch ein optimaler Anstieg der Innentemperatur des Gebäudes bewirkt werden kann. Der Benutzer braucht zu diesem Zweck keine weiteren Einstellungen außer der Bildung der Sollgröße mit dem Solltemperaturgeber vornehmen.

Vorteilhaft ist weiterhin, wenn die Sollgröße über einen Normierungsregler an den dritten Eingang der Regelschaltung geführt ist, wobei an einen Eingang der Normierungsreglers die Sollgröße und am anderen Eingang eine vorgegebene, einer festgelegten Innentemperatur des Gebäudes entsprechenden Größe, anliegt und am Ausgang des Normierungsreglers die Sollgröße in normierter Form anliegt. Dadurch daß nur Abweichungen der Sollgröße von einer festgelegten Innentemperatur — z. B. 20 °C — am Ausgang des Normierungsreglers zum Auftreten der Sollgröße in normierter Form führt, ist auf einfache Weise erreicht, daß sich die Regelvorrichtung bei Übereinstimmung von Solltemperatur und Innentemperatur in der Ruhelage befindet und somit nur Regelvorgänge ausgelöst werden, wenn die tatsächliche Innentemperatur von der festgelegten Innentemperatur abweicht.

Besonders vorteilhaft ist, wenn ein dritter Eingang der Optimierungsschaltung mit einer elektronischen Uhr verbunden ist, die Taktimpulse an die Optimierungsschaltung abgibt. Bei jedem Taktimpuls wird die Optimierungsschaltung angeregt, eine Auswertung der Größen an ihren Eingängen vorzunehmen. Dadurch ist sichergestellt, daß Änderungen der Regeldifferenz bzw. Änderungen der unbewerteten einen Führungsgröße in vorgebbaren Abständen von der Optimierungsschaltung erfaßt werden und gegebenenfalls zu einem Ausgangssignal am Ausgang der Optimierungsschaltung führen.

Die Optimierungsschaltung ist in vorteilhafter Weise derart organisiert, daß bei jedem Taktimpuls in der Optimierungsschaltung das Ausgangssignal des Führungsreglers mit einem oberen und einem unteren Grenzwert verglichen wird und bei Überschreiten des oberen Grenzwertes ein positives Optimierungssignal und bei Unterschreiten des unteren Grenzwertes ein negatives Optimierungssignal in der Optimierungsschaltung gebildet und gespeichert wird und daß nach jeweils einer vorgegebenen Zeitspanne ein positiver oder negativer Optimierungsbefehl als Ausgangssignal der Optimierungsschaltung auftritt im Abhängigkeit davon, ob die Anzahl der gespeicherten positiven oder negativen Optimierungssignale überwiegt.

Vorteilhafterweise folgen bei der letztgenannten Ausführungsform die Taktimpulse am dritten Eingang der Optimierungsschaltung in relativ kurzen Abständen aufeinander, z. B. einmal pro Minute ; hierdurch ist sichergestellt, daß nahezu alle Temperatureinflüsse auf das Gebäude erfaßt werden. Damit jedoch nur Temperaturschwankungen im Inneren des Gebäudes ausgewertet werden, die einen oberen bzw. einen unteren Grenzwert überschreiten, wird ein Optimierungssignal nur erzeugt, wenn eine Über- bzw. Unterschreitung eines des Grenzwerte vorliegt. Hierdurch sind auf einfache Weise Störeinflüsse ausgeschaltet, die nur kurzzeitig oder geringfügig auf die Innentemperatur einwirken und keinen dauerhaften Einfluß auf die Innentemperatur haben. Da die Schwankungen der Innentemperatur und somit auch der Regeldifferenz innerhalb einer vorgegebenen Zeitspanne in beiden Richtungen stattfinden können, wird nach dem Ablauf der vorgegebenen Zeitspanne mittels der Optimierungsschaltung geprüft, ob entweder die Überschreitungen oder die Unterschreitungen des jeweiligen Grenzwertes überwiegen. Bei einer überwiegenden Überschreitung des oberen Grenzwertes wird ein positiver Optimierungsbefehl gebildet, und bei einer überwiegenden Unterschreitung des unteren Grenzwertes wird ein negativer Optimierungsbefehl nach der vorgegebenen Zeitspanne gebildet. Um die Bildung eines Optimierungsbefehls bei einem geringfügigen Überwiegen der Anzahl entweder der Über- oder der Unterschreitungen zu vermeiden, kann hier ein Toleranzbereich vorgegeben werden.

Um eine zusätzliche Auswertung der unbewerteten einen Führungsgröße (Außentemperatur) zu ermöglichen, weist die Optimierungsschaltung ein Schaltungsteil auf, in dem nach der jeweils vorgegebenen Zeitspanne die unbewertete eine Führungsgröße mit einem vorgegebenen Wert verglichen wird und in dem, in Abhängigkeit vom Über- bzw. Unterschreiten dieses Wertes durch die unbewertete eine Führungsgröße, das Ausgangssignal der Optimierungsschaltung zusätzlich beeinflußt wird.

Durch die zusätzliche Auswertung der einen Führungsgröße in der Optimierungsschaltung wird das Ausgangssignal der Optimierungsschaltung (Optimierungsbefehl) derart beeinflußt, daß mit der Bewertungsschaltung entweder die Steigung der Heizkurve oder das Niveau der Heizkurve verändert wird. Es ist somit möglich, bei einer Führungsgröße, die einer relativ niedrigen Außentemperatur entspricht, die Steigung der Heizkurve zu verändern — d. h., eine relativ steile Änderung der Vorlauftemperatur zu erreichen. Bei einer Führungsgröße, die einer größeren Außentemperatur entspricht, wird hier lediglich das Niveau der Heizkurve verändert, wobei in diesem Fall die Änderung der Vorlauftemperatur gleich bleibt und der Betrag der Vorlauftemperatur gleichbleibend angehoben bzw. abgesenkt wird.

Der Wert, den die eine Führungsgröße unter- bzw. überschreitet, kann beispeilsweise bei + 5 °C liegen, um ein optimales Arbeiten der erfindungsgemäßen Regelvorrichtung zu gewährleisten.

Die Einstellung einer Sollgröße läßt sich auf einfache Weise durchführen, indem der Solltemperaturgeber eine Verstellvorrichtung zur inkrementellen Bildung der Sollgröße enthält. Die Verstellvorrichtung kann auf einfache Weise zur Verstellung einer elektrischen Größe so betätigt werden, daß sie dem Ausgang des Solltemperaturgebers eine Sollgröße zur Verfügung stellt, die der gewünschten Innentemperatur des Gebäudes äquivalent ist.

Besonders vorteilhaft ist, wenn der Solltemperaturgeber einen Solltemperaturspeicher enthält, der mit der elektronischen Uhr verbunden ist und der unter mehreren Speicheradressen abgelegte Sollgrößen enthält, wobei die Speicheradressen vorgegeben und von der elektronischen Uhr erzeugten Zeitimpulsen zugeordnet sind und bei Auftreten der vorgegebenen Zeitimpulse die jeweiligen unter der zugeordneten Speicheradresse abgelegten Sollgrößen am Ausgang des Solltemperaturgebers anstehen.

Die Speicheradressen sind bei dieser Ausführungsform der erfindungsgemäßen Regelvorrichtung so gestaltet, daß sie vorwählbaren Uhrzeiten entsprechen. Bei Übereinstimmung einer der Adressen mit der von der Uhr ermittelten Zeit wird die unter dieser Adresse abgelegte Sollgröße dem Ausgang des Solltemperaturgebers zur Verfügung stellt. Somit ist auf einfache Weise eine selbsttätige Verstellung der Sollgröße, die von der elektronischen Uhr aktiviert wird, möglich, ohne daß der Benutzer der Heizungsanlage eingreifen muß. Eine Änderung der Sollgröße bewirkt eine Änderung der Regeldifferenz, was bei ausreichender Größe der Regeldifferenz nach Ablauf einer Zeitspanne die Erzeugung eines Optimierungsbefehls durch die Optimierungsschaltung zur Folge hat. Es ist weiterhin möglich, im Solltemperaturgeber einen Umschalter vorzusehen, mit dem wahlweise entweder die Verstellvorrichtung oder der Solltemperaturspeicher auf den Ausgang des Solltemperaturgebers geschaltet werden kann.

Es ist außerdem vorteilhaft, wenn die Verstellvorrichtung des Solltemperaturgebers mit einem vierten Eingang der Optimierungsschaltung verbindbar ist, wobei die Verstellvorrichtung derart auf die Optimierungsschaltung einwirkt, daß bei Betätigen der Verstellvorrichtung ein positiver oder negativer Befehl als Ausgangssignal der Optimierungsschaltung auftritt. Durch eine direkte Eingabe einer Sollgröße mittels der Verstellvorrichtung in die Optimierungsschaltung kann auf einfache Weise erreicht werden, daß ohne Erzeugung von Optimierungssignalen direkt ein Befehl dem Ausgang der Optimierungsschaltung zur Verfügung gestellt wird. Bei einer Beeinflussung der Optimierungsschaltung gemäß dieser Ausführungsform der erfindungsgemäßen Regelvorrichtung wird keine Auswertung der Regeldifferenz und der einen Führungsgröße vorgenommen, so daß sich bei Betätigen der Verstellvorrichtung unmittelbar ein Anstieg bzw. Abfall der Vorlauftemperatur des Heizmittels und somit eine Veränderung der Innentemperatur einstellt.

Gemäß einer weiteren Ausführungsform der erfindungsgemäßen Regelvorrichtung mit einem ersten Temperaturgeber für die Vorlauftemperatur des Heizmittels und einem zweiten Temperaturgeber für die Außentemperatur des Gebäudes ist ein dritter Temperaturgeber für die Innentemperatur des die Heizungsanlage umgebenden Gebäudes vorhanden ; den Temperaturgebern ist jeweils ein Normierungsbaustein nachgeordnet. Die Normierungsbausteine sind jeweils so aufgebaut, daß an ihrem Ausgang jeweils eine Größe ansteht, die der Abweichung der jeweiligen Eingangsgröße von einem mit der Beschaltung der Normierungsbausteins jeweils vorgegebenen Bezugswert entspricht.

Die Normierungsbausteine ermöglichen eine einfache Weiterverarbeitung der von dem Temperaturgebern erzeugten elektrischen Größen, da sie jede dieser Größen auf einen vorgebenen Bezugswert normieren und lediglich Abweichungen von diesem Bezugswert als Ausgangssignal zur Verfügung stellen.

Eine besondere Vereinfachung dieser Ausführungsform ergibt sich, wenn die Ausgänge der Normierungsbausteine mit dem Analogeingang jeweils eines Analog-Digital-Wandlers verbunden sind, an deren Ausgängen jeweils die Regelgröße, die unbewertete eine Führungsgröße und die weitere Führungsgröße in digitaler Form anstehen. Die Umsetzung der normierten Größen in Digitalsignale, die jeweils nur der Abweichung von einem vorgegebenen Bezugswert entsprechen, macht in vorteilhafter Weise eine weitgehende Vereinheitlichung der in der erfindungsgemäßen Regelvorrichtung verwendeten Bauelemente möglich.

Besonders vorteilhaft ist, wenn die Ausgänge der Normierungsbausteine zusammengeschaltet sind und mit dem Analogsignal eines einzigen Analog-Digital-Wandlers verbunden sind und ein Steuereingang jedes Normierungsbausteines mit jeweils einem Ausgang eines Ansteuerbausteins verbunden ist, der die Normierungsbausteine nacheinander zu einer Abgabe ihres Ausgangssignals an den Eingang des einzigen Analog-Digital-Wandlers veranlaßt und der das Ausgangssignal des einzigen Analog-Digital-Wandlers nacheinander verschiedene Anschlußleitungen zuordnet. Mittels des Ansteuerbausteins kann auf einfache Weise eine serielle Abgabe der einzelnen Ausgangsgrößen der Normierungsbausteine an den einzigen Analog-Digital-Wandlers erfolgen. Es ist hierbei möglich, die Taktsignale des Ansteuerbausteins aus den Taktimpulsen der elektronischen Uhr zu gewinnen, so daß eine wesentliche Einsparung an Bauelementen erreichbar ist.

Ferner ist vorteilhaft, wenn der mit dem Temperaturgeber für die Vorlauftemperatur des Heizmittels verbundene Normierungsbaustein so aufgebaut ist, daß sein Bezugswert einstellbar ist. Der Temperaturbereich der Vorlauftemperatur ist üblicherweise auf die Art der verwendeten Heizungsanlage abgestimmt. So ist bei Verwendung einer Radiatorheizung eine Vorlauftemperaturgrenze von ca. 80 °C, bei Verwendung einer Fußbodenheizung eine Vorlauftemperaturgrenze von ca. 50 °C üblich.

Durch eine einfache Einstellung des Bezugswertes im Normierungsbaustein für den Temperaturgeber der Vorlauftemperatur ist somit eine Anpassung der erfindungsgemäßen Regelvorrichtung an die verwendete Heizungsanlage auf einfache Weise durchzuführen.

Ein vorteilhafter Aufbau der Normierungsbausteine ist möglich, wenn die Normierungsbausteine jeweils einen Operationsverstärker enthalten, der einen aus einem Widerstandsnetzwerk bestehenden Rückkopplungszweig aufweist, wobei durch die Bemessung der Widerstände der Bezugswert vorgegeben bzw. einstellbar ist. Die Operationsverstärker können hierbei gleich sein, unterschiedlich ist lediglich der Aufbau ihres Rückkopplungszweiges.

Ein besonders einfacher Aufbau der erfindungsgemäßen Regelvorrichtung ergibt sich, wenn die Optimierungsschaltung Bestandteil eines Microcomputers ist. Die Optimierungsschaltung läßt sich als Bestandteil eines Microcomputers in vorteilhafter Weise realisieren, da dieser durch vorher eingegebene und durch die Taktimpulse aufgerufene Programmbefehle jeweils das Einlesen der Regeldifferenz und der einen Führungsgröße, die Bildung der Optimierungssignale, die Speicherung dieser Signale und die Erzeugung der Optimierungsbefehle bewirken kann. Dies läßt sich umso leichter realisieren, wenn die Bauelemente in der erfindungsgemäßen Regelvorrichtung, insbesondere auch der Führungsregler, der Normierungsregler, die Bewertungsschaltung und die elektronische Regelschaltung aufgrund interner Schaltungsmaßnahmen zur Verarbeitung digitaler Signale geeignet sind.

Vorteilhaft ist außerdem, wenn die Eingänge der elektronischen Regelschaltung und der Ausgang der Optimierungsschaltung mit dem Eingang eines Speicherbausteins verbunden sind, dessen Speicherinhalt auch bei Spannungsabfall erhalten bleibt. Mit dieser Ausführungsform ist auf einfache Weise sichergestellt, daß alle zur optimalen Funktion der erfindungsgemäßen Regelvorrichtung notwendigen elektrischen Signale auch bei einem Ausfall der Versorgungsspannung der Regelvorrichtung erhalten bleiben. Somit ist es bei erneuter Inbetriebnahme der Regelvorrichtung möglich, bei der fortlaufenden Optimierung von diesen gespeicherten Signalen auszugehen und nicht eine vollständige Optimierung, wie es bei Inbetriebnahme der Regelvorrichtung, notwendig ist, vornehmen zu müssen.

Eine einfache Veränderung der Vorlauftemperatur des Heizmittels durch das Stellglied erfolgt, wenn mit dem Ausgang der elektronischen Regelschaltung eine Schrittimpulsschaltung verbunden ist, die abhängig vom Wert der Stellgröße am Ausgang der Regelschaltung eine Anzahl Schrittimpulse erzeugt, die eine schrittweise Verstellung eines Stellgliedes zur Veränderung der Vorlauftemperatur des Heizmittels bewirkt. Hiermit ist eine außerordentlich genaue und schnelle Beeinflussung des Stellgliedes in Abhängigkeit von der Regelgröße am Ausgang der Regelschaltung möglich. Auch ist mittels der Schrittimpulsschaltung eine direkte Auswertung von Digitalsignalen am Ausgang der Regelschaltung und die Erzeugung ebenfalls digitaler Schrittimpulse für das Stellglied möglich.

Um auch bei extremen Schwankungen der Außentemperatur als auch der gewünschten Innentemperatur (Sollgröße) des die heizungsanlage umgebenden Gebäudes eine schnelle Regelung der tatsächlichen Innentemperatur zu erreichen, ist in vorteilhafter Weise der Ausgang des Solltemperaturgebers mit dem Eingang der Bewertungsschaltung verbunden.

Eine Änderung z. B. der gewünschten Innentemperatur stellt sich als Sprung der Sollgröße am Ausgang des Solltemperaturgebers dar, der auf den dritten Eingang der elektronischen Regelschaltung einwirkt, aber auch zu einer Änderung der Regeldifferenz am Ausgang der Führungsreglers und somit eventuell zu Optimierungsschritten führt. Ein solcher Sprung der Sollgröße führt demgemäß abhängig von den dynamischen Eigenschaften des Führungsreglers und der elektronischen Regelschaltung nach einer Zeitspanne zu einer Änderung der Innentemperatur, wobei auf die eingestellte Heizkurve bzw. auf eine Änderung dieser Heizkurve zunächst kein Einfluß ausgeübt wird ; ein solcher Einfluß kann nur mittels eventuell erfolgender Optimierungsbefehle in relativ großen Zeitabständen am Ausgang der Optimierungsschaltung ausgeübt werden.

Der Führungsregler und die elektronische Regelschaltung bilden mit der Heizungsanlage und dem die Heizungsanlage umgebenden Gebäude einen Regelkreis, bei dem die verschiedenen Regelbausteine, z. B. Führungsregler und elektronische Regelschaltung, bezüglich ihres dynamischen Verhaltens zur Erreichung einer möglichst schnellen Regelung der Innentemperatur, insbesondere hinsichtlich der gesamten Kreisverstärkung und der Zeitkonstanten optimal aufeinander abgestimmt sein müssen.

Mit der Anordnung nach der letztgenannten Ausführungsform ist auf einfache Weise erreicht, daß sich ein Sprung der Sollgröße durch Vorgabe einer neuen gewünschten Innentemperatur (Solltemperatur) möglichst schnell als Erhöhung der tatsächlichen Innentemperatur auswirkt. Dadurch, daß die Änderung der Sollgröße (Außentemperatur) in der Bewertungsschaltung bewertet wird, kann das dynamische Verhalten des gesamten Regelkreises optimal gestaltet werden, da abhängig von der eingestellten Heizkurve in der Bewertungsschaltung sich auch ein entsprechender Sprung der bewerteten Führungsgröße am Eingang der elektronischen Regelschaltung bemerkbar macht.

Bei einer besonders vorteilhaften Ausführungsform ist der Führungsregler als P-Regler ausgebildet und mit dem Ausgang einer Parameteränderungsschaltung verbunden, die mit ihrem Eingang am Ausgang der Optimierungsschaltung angeschlossen ist, wobei die Parameteränderungsschaltung, abhängig vom Ausgangssignal der Optimierungsschaltung, ein das Proportionalverhalten des Führungsreglers beeinflussendes Signal erzeugt.

Bei dieser Ausführungsform der erfindungsgemäßen Regelvorrichtung ist auf einfache Weise die Auswertung der jeweils eingestellten Heizkurve zur Anpassung des dynamischen Verhaltens des Führungsreglers an die Heizkurve möglich. Ist eine Änderung der Steigung der Heizkurve erforderlich, z. B. durch Änderung in der Heizungsanlage, so kann sich dies nachteilig auf das dynamische Verhalten des gesamten Regelkreises auswirken, da die Übergangsfunktionen, d. h. die Beziehung zwischen Änderungen der Ausgangs- und der Eingangsgrößen der Regelbausteine (z. B. des Führungsreglers), nur für bestimmte Änderungen ihrer Eingangsgrößen ein optimales dynamisches Verhalten aufweisen. Das dynamische Verhalten ist hier auch insofern von Bedeutung, da ständiges oder lang andauerndes Überschwingen der resultierenden Innentemperatur des Gebäudes um die gewünschte Innentemperatur als störend empfunden wird und darüber hinaus zu einem überflüssigen Verbrauch an Heizenergie führt.

Bei einer weiteren Ausführungsform ist die elektronische Regelschaltung zur Gewährleistung eines optimalen dynamischen Verfahltens des Regelkreises als PI-Regler ausgebildet und ist mit dem Ausgang einer weiteren Parameteränderungsschaltung verbunden. In vorteilhafter Weise ist die Parameteränderungsschaltung mit ihrem Eingang an dem Ausgang der Bewertungsschaltung anschaltbar, wobei die weitere Parameteränderungsschaltung abhängig vom Ausgangssignal der Bewertungsschaltung ein das Proportionalverhalten des Führungsreglers beeinflussendes Signal erzeugt.

Mit dieser Ausführungsform kann auf einfache Weise der Proportionalanteil der elektronischen Regelschaltung derart verändert werden, das diese abhängig von der bewerteten einen Führungsgröße (Außentemperatur) am Ausgang der Bewertungsschaltung ist. Das dynamische Verhalten der elektronischen Regelschaltung kann somit an den Schwankungsbereich mindestens einer der Eingangsgrößen der Regelschaltung angepaßt werden, so daß eine annähernd gleichbleibende Kreisverstärkung des gesamten Regelkreises gewährleistet ist, unabhängig von der Vorlauftemperatur und von der Art der Heizungsanlage.

Bei einer vorteilhaften Weiterbildung der erfindungsgemäßen Regelvorrichtung mit einer als PI-Regler ausgeführten Regelschaltung ist die Parameteränderungsschaltung mit ihrem Eingang an eine die Regelgröße führende Leitung anschaltbar, wobei die weitere Parameteränderungsschaltung, abhängig von dem Wert der Regelgröße, ein das Proportionalverhalten der elektronischen Regelschaltung beeinflussendes Signal abgibt.

Mit dieser Ausführungsform kann auf einfache Weise erreicht werden, daß der Proportionalanteil der elektronischen Regelschaltung abhängig von der die Regelgröße bildenden Vorlauftemperatur verändert werden kann. Für bestimmte Anwendungsfälle kann es wünschenswert sein, das dynamische Verhalten der elektronischen Regelschaltung an den Wert der Vorlauftemperatur anzupassen, um eine optimale Regelung besonders für einen Zeitraum nach einer gewollten Änderung der Vorlauftemperatur, z. B. bei Veränderungen der Heizungsanlage, zu ermöglichen.

Gemäß einer weiteren vorteilhaften Weiterbildung ist die Parameteränderungsschaltung an ihrem Eingang mit einer Größe beaufschlagbar, die dem Stellwinkel eines zur Heizungsanlage gehörenden Stellgliedes proportional ist, wobei die weitere Parameteränderungsschaltung abhängig von der dem Stellwinkel proportionalen Größe ein das Proportionalverhalten der elektronischen Regelschaltung beeinflussendes Signal erzeugt.

Dadurch, daß die am Eingang der Heizungsanlage anstehende Stellgröße, die sich als Stellwinkel des Stellgliedes (z. B. Mischventil für das Heizmittel in der Heizungsanlage) darstellen läßt, als Signal für die Steuerung der weiteren Parameteränderungsschaltung herangezogen wird, ist auf einfache Weise erreicht, daß störende Einflüsse, z. B. nicht lineares Verhalten der Heizungsanlage, sich nicht negativ auf das dynamische Verhalten der Regelung auswirken.

Die Erfindung wird anhand der Figuren erläutert, wobei in

Figur 1 das Blockschaltbild eines Ausführungsbeispiels der erfindungsgemäßen Regelvorrichtung, in

Figur 2 ein Ausführungsbeispiel des Temperaturgeber enthaltenden Schaltungsteils der Regelvorrichtung, in

Figur 3 ein Ablaufplan der Optimierung der erfindungsgemäßen Regelvorrichtung und in

Figur 4 ein weiteres Ausführungsbeispiel der erfindungsgemäßen Regelvorrichtung dargestellt ist.

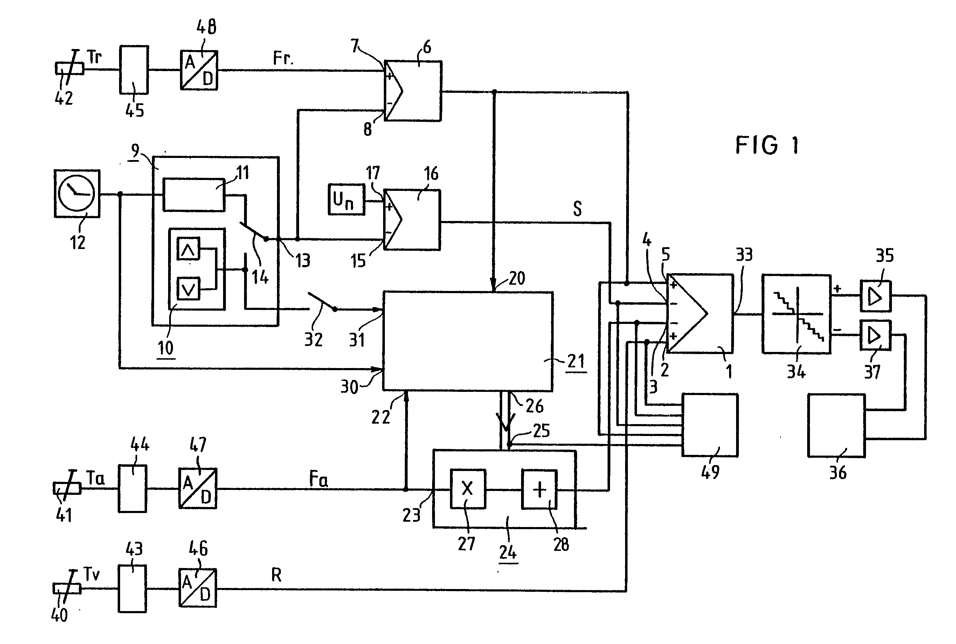

Die in Fig. 1 dargestellte Regelvorrichtung für Heizungsanlagen enthält eine elektronische Regelschaltung 1, an deren Eingang 2 eine von der Vorlauftemperatur eines Heizmittels gesteuerte Regelgröße R anliegt, an deren zweitem Eingang 3 eine bewertete, von der Außentemperatur des die Heizungsanlage umgebenden Gebäudes abhängige Führungsgröße Fa anliegt, an deren drittem Eingang 4 eine entsprechend einer Solltemperatur gebildete Sollgröße S anliegt und an deren viertem Eingang 5 das Ausgangssignal eines Führungsreglers 6 anliegt. An einem Eingang 7 des Führungsreglers 6 steht eine weitere Führungsgröße Fr an, die von der Innentemperatur des die Heizungsanlage umgebende Gebäudes abhängig ist, und an einem anderen Eingang 8 steht die von einem Solltemperaturgeber 9 erzeugte Sollgröße S an.

Der Solltemperaturgeber 9 weist eine Verstellvorrichtung 10 zur inkrementellen Bildung der Sollgröße S auf und enthält außerdem einen Solltemperaturspeicher 11, in dem mehrere unter verschiedenen Speicheradressen abgelegte Sollgrößen gespeichert sind. Der Solltemperaturspeicher 11 ist mit einer elektronischen Uhr 12 verbunden, die Zeitimpulse erzeugt, wobei bei einer Übereinstimmung von Zeitimpulsen der Uhr 12 mit den Speicheradressen die Sollgrößen an den Ausgang 13 des Solltemperaturgebers 9 gelangen. Mittels eines Umschalters 14 ist es möglich, wahlweise die Verstellvorrichtung 10 oder den Solltemperaturspeicher 11 an den Ausgang 13 des Solltemperaturgebers 9 zu schalten. Die Sollgröße S ist weiterhin auf einen Eingang 15 eines Normierungsreglers 16 geführt, an dessen anderem Eingang 17 eine für die Normierung ausschlaggebende Normierungsspannung Un anliegt. Die Normierungsspannung Un ist so gewählt, daß am Ausgang des Normierungsreglers 16 eine normierte Sollgröße S anliegt, die aus der Differenz der Sollgröße am einen Eingang 15 und einer durch die Normierungsspannung Un definierten Innentemperatur des Gebäudes (z. B. 20 °C) gebildet ist.

Das Ausgangssignal des Führungsreglers 6 ist auf einen Eingang 20 einer Optimierungsschaltung 21 geführt ; an einem anderen Eingang 22 der Optimierungsschaltung 21 liegt die unbewertete Führungsgröße Fa an, die ebenfalls auf einen Eingang 23 einer Bewertungsschaltung 24 geführt ist. Ein anderer Eingang 25 der Bewertungsschaltung 24 ist mit dem Ausgang 26 der Optimierungsschaltung 21 verbunden. Die Bewertungsschaltung 24 enthält eine Verknüpfungsschaltung 27 (z. B. Multiplizierer), mittels der die eine Führungsgröße Fa so bewertet wird, daß sich eine Änderung der Steigung der Heizungskurve ergibt und eine andere Verknüpfungsschaltung 28 (z. B. Summierer), mittels der die eine Führungsgröße Fa derart bewertet wird, daß sich eine Änderung des Niveaus der Heizkurve ergibt. Der Ausgang der Bewertungsschaltung ist mit dem zweiten Eingang 3 der Regelschaltung 1 verbunden.

Ein dritter Eingang 30 der Optimierungsschaltung 21 ist mit einem Ausgang der elektronischen Uhr 12 verbunden und erhält somit von der elektronischen Uhr 12 Taktimpulse zur Erzeugung von Optimierungssignalen und erhält darüber hinaus nach einer vorgegebenen Zeitspanne einen Auslöseimpuls zur Erzeugung eines Optimierungsbefehls am Ausgang 26 der Optimierungsschaltung 21. Ein vierter Eingang 31 der Optimierungsschaltung 21 ist mit der Verstellvorrichtung 10 des Solltemperaturgebers 9 über einen Schalter 32 verbindbar, so daß mittels der Verstellvorrichtung 10 direkt ohne Bildung von Optimierungssignalen Befehle am Ausgang 26 der Optimierungsschaltung 21 zur Verfügung gestellt werden können. Abhängig von dem mit der Verstellvorrichtung 10 gebildeten Wert — der einer gewünschten Innentemperatur des Gebäudes entspricht — wird hier somit ein Befehl erzeugt, der die eine Führungsgröße Fa so bewertet, daß dies sich unmittelbar in einem Ansteigen oder Abfallen der Vorlauftemperatur des Heizmittels bzw. in einer Änderung der Parameter der Heizkurve äußert.

Am Ausgang 33 der elektronischen Regelschaltung 1 steht eine Stellgröße zur Veränderung der Vorlauftemperatur des Heizmittels an. Diese Stellgröße wird mittels einer Schrittimpulsschaltung 34 in eine entsprechende Anzahl positiver oder negativer Schrittimpulse umgesetzt, wobei die positiven Schrittimpulse über einen Verstärker 35 auf ein Stellglied 36 und die negativen Schrittimpulse über einen Verstärker 37 auf das Stellglied 36 geführt werden. Mit dem Stellglied 36 kann der Fluß des Heizmittels, z. B. mittels eines Ventils, so gesteuert werden, daß sich eine Änderung der Vorlauftemperatur ergibt.

In der Fig. 1 ist weiterhin ein Temperaturgeber 40 (zur Erfassung der Vorlauftemperatur), ein Temperaturgeber 41 (zur Erfassung der Außentemperatur) und ein Temperaturgeber 42 (zur Erfassung der Innentemperatur) vorhanden. Die Ausgangsgrößen dieser Temperaturgeber sind über Normierungsbausteine 43, 44 bzw. 45 auf die Analogeingänge jeweils eines Analog-Digital-Wandlers 46, 47 bzw. 48 geführt. Der Ausgang des Analog-Digital-Wandlers 46 ist mit dem einen Eingang 2 der Regelschaltung verbunden ; am ihm steht die Regelgröße R an. Der Analog-Wandler 47 ist mit dem Eingang 23 der Bewertungsschaltung 24 verbunden ; an ihm befindet sich die unbewertete eine Führungsgröße Fa. Der Analog-Digital-Wandler 48 ist mit dem einen Eingang 7 des Führungsreglers 6 verbunden und bildet die weitere Führungsgröße Fr aus seinem Eingangssignal.

Die Eingänge 2, 3, 4 und 5 der Regelschaltung 1 und der Ausgang 26 der Optimierungsschaltung 21 sind zusätzlich auf Eingänge eines Speicherbausteins 49 geführt, der die jeweils aktuellen Größen speichert und dessen Speicherinhalt auch bei Spannungsabfall an der gesamten Regelvorrichtung erhalten bleibt.

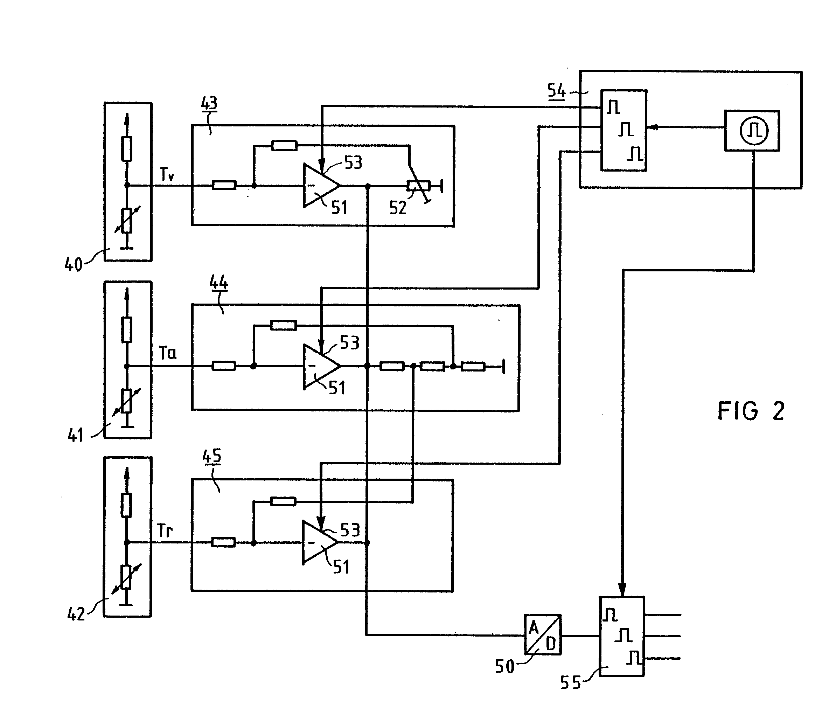

In der Fig. 2 ist ein Ausführungsbeispiel des die Temperaturgeber 40, 41, 42 und die Normierungsbausteine 43, 44, 45 aufweisenden Schaltungsteile der Regelvorrichtung dargestellt. Die Ausgänge der Normierungsbausteine sind bei diesem Ausführungsbeispiel zusammengeschaltet und auf den Eingang eines einzigen Analog-Digital-Wandlers 50 geführt. Die Normierungsbausteine 43, 44, 45 sind jeweils aus einem Operationsverstärker 51 aufgebaut, die jeweils verschiedene Widerstandsnetzwerke in ihrem Rückkopplungszeig aufweisen. Die Widerstandsnetzwerke sind so bemessen, daß die von den entsprechenden Temperaturgebern abgegebenen Größen auf eine vorgegebene Normtemperatur bezogen werden. Am Ausgang des Normierungsbausteins 45 steht eine Größe an, die einer relativen Änderung der Innentemperatur Tr entspricht — z. B. in einem Bereich von 10 °C $\hat{=}$ 0 % und 35 °C $\hat{=}$ 100 %. Am Ausgang des Normierungsbausteins 44 steht eine Größe an, die einem Temperaturbereich der Außentemperatur Ta von z. B. – 25 °C = 0 % bis 20 °C = 100 % entspricht. Am Ausgang des Normierungsbausteins 43 steht eine Größe an, die z. B. einer Vorlauftemperatur von 20 °C = 0 % und 110 °C = 100 % entspricht ; die Grenzen dieses letztgenannten Temperaturbereiches sind jedoch mittels eines Potentiometers 52 am Normierungsbaustein 43 einstellbar und somit ist die Regelvorrichtung verschiedenen Heizungstechniken (Radiatorheizung, Fußbodenheizung) anpaßbar. Der Operationsverstärker 51 weist Steuereingänge 53 auf, die mittels eines Ansteuerbausteins 54 nacheinander aktiviert werden, so ᴅaß am Eingang des Analog-Digital-Wandlers 50 nacheinander die Ausgangsgrößen der Normierungsbausteine 43, 44, 45 anstehen. Am Ausgang des Analog-Digital-Wandlers 50 ist eine Verteilschaltung 55 vorgesehen, die nach serieller Analog-Digital-Wandlung die verschiedenen Wandlungsergebnisse auf verschiedene Anschlüsse verteilt und durch Steuerimpulse der Ansteuerschaltung 54 angeregt wird.

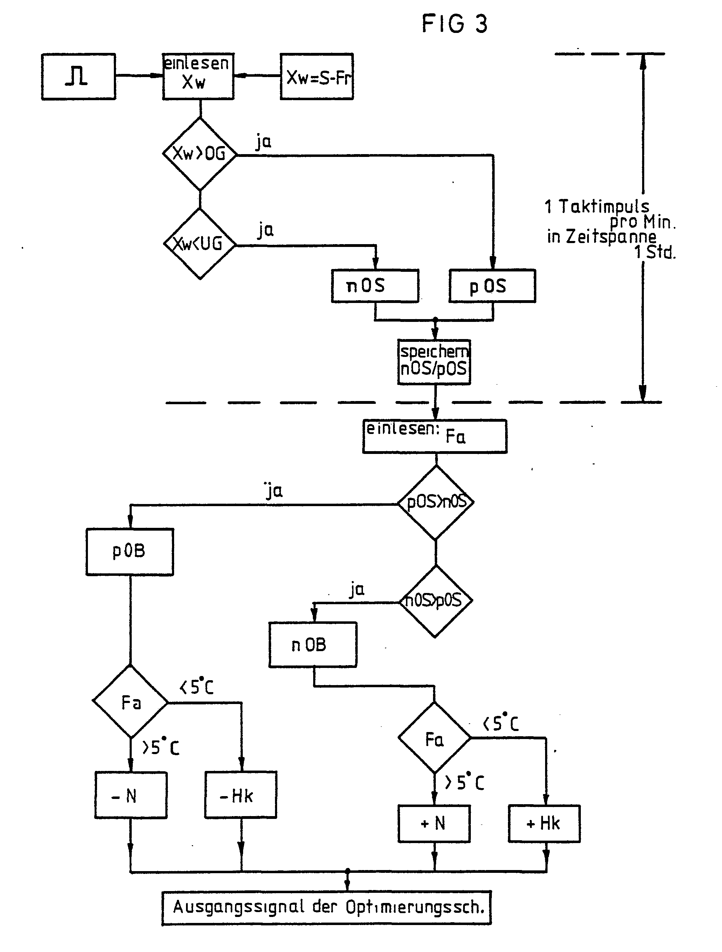

Anhand des in der Fig. 3 dargestellten Ablaufplans wird die Optimierung der Regelvorrichtung für Heizungsanlagen erläutert. Die im Ablaufplan verwendeten Abkürzungen haben folgende Bedeutung :

Fa = unbewertete eine Führungsgröße (Außentemperatur Ta)

Fr = weitere Führungsgröße (Innentemperatur Tr)

S = Sollgröße (Solltemperatur)

Xw = Regeldifferenz

OG = oberer Grenzwert der Regeldifferenz

UG = unterer Grenzwert der Regeldifferenz

pOS = positives Optimierungssignal

nOS = negatives Optimierungssignal

pOB = positiver Optimierungsbefehl

nOB = negativer Optimierungsbefehl

+ N = positiver Optimierungsbefehl zur Erniedrigung des Niveaus der Heizkurve

+ HK = positiver Optimierungsbefehl zur Verminderung der Steigung der Heizkurve

− N = negativer Optimierungsbefehl zur Erhöhung des Niveaus der Heizkurve

− HK = negativer Optimierungsbefehl zur Erhöhung der Steigung der Heizkurve

Durch die Taktimpulse z. B. der elektronischen Uhr 12 wird die Optimierungsschaltung 21, die beim Ausführungsbeispiel Bestandteil eines Microcomputers ist, zur Erzeugung eines Optimierungssignals, z. B. in jeder Minute, veranlaßt ; hierzu wird beim Auftreten eines Taktimpulses zunächst das Ausgangssignal des Führungsreglers 6 (Regeldifferenz : Xw) eingelesen. Die Regeldifferenz Xw wird aus der Differenz zwischen Sollgröße (Solltemperatur) und weiterer Führungsgröße (Innentemperatur Tr) des Gebäudes ermittelt. Die Regeldifferenz Xw wird nunmehr mit einem oberen und mit einem unteren vorgegebenen Grenzwert verglichen, und es wird bei Überschreiten des oberen Grenzwertes ein positives Optimierungssignal und bei Unterschreiten des unteren Grenzwertes ein negatives Optimierungssignal erzeugt. Diese Optimierungssignale werden zunächst gespeichert.

Nach einer vorgegebenen Anzahl von Taktimpulsen bzw. einer vorgegebenen Zeitspanne (z. B. eine Stunde) wird die unbewertete eine Führungsgröße Fa eingelesen. Daran anschließend wird ermittelt, ob die Anzahl der positiven oder der negativen Optimierungssignale überwiegt und sodann entweder ein positiver oder ein negativer Optimierungsbefehl erzeugt. Der Wert der Führungsgröße Fa wird mit einem vorgegebenen Wert — hier z. B. entspricht der Wert + 5 °C — verglichen.

Zunächst soll vom Vorhandensein eines positiven Optimierungsbefehls ausgegangen werden. Überschreitet der Wert die Größe + 5 °C, so wird ein positiver Optimierungsbefehl zur Erniedrigung des Niveaus der Heizkurve am Ausgang 26 der Optimierungsschaltung 21 zur Verfügung gestellt. Unterschreitet die Größe + 5 °C, so wird ein positiver Optimierungsbefehl zur Verminderung der Steigung der Heizkurve am Ausgang 26 zur Verfügung gestellt.

Liegt ein negativer Optimierungsbefehl in der Optimierungs Schaltung vor, so wird zunächst der Vergleich der Größe Fa mit 5 °C in gleicher Weise vorgenommen ; es wird jedoch sodann entweder ein negativer Optimierungsbefehl zur Erhöhung des Niveaus der Heizkurve oder ein negativer Optimierungsbefehl zur Erhöhung der Steigung der Heizkurve am Ausgang 26 der Optimierungsschaltung 21 zur Verfügung gestellt.

Somit ist mit einer Regelvorrichtung für Heizungsanlegen gemäß diesem Ausführungsbeispiel eine selbsttätige Optimierung bei der Regelung der Vorlauftemperatur der Heizungsanlage möglich. Die Veränderung der Vorlauftemperatur Tv erfolgt durch das Stellglied 36 in der Heizungsanlage. Es ist für den Benutzer der Heizungsanlage lediglich notwendig, eine gewünschte Solltemperatur für das Innere des Gebäudes mit der Verstellvorrichtung 10 bzw. im Solltemperaturspeicher 11 vorzugeben ; somit sind Bedienungsfehler von vornherein weitgehend vermieden, und es ist eine optimale Regelung der Innentemperatur erreichbar.

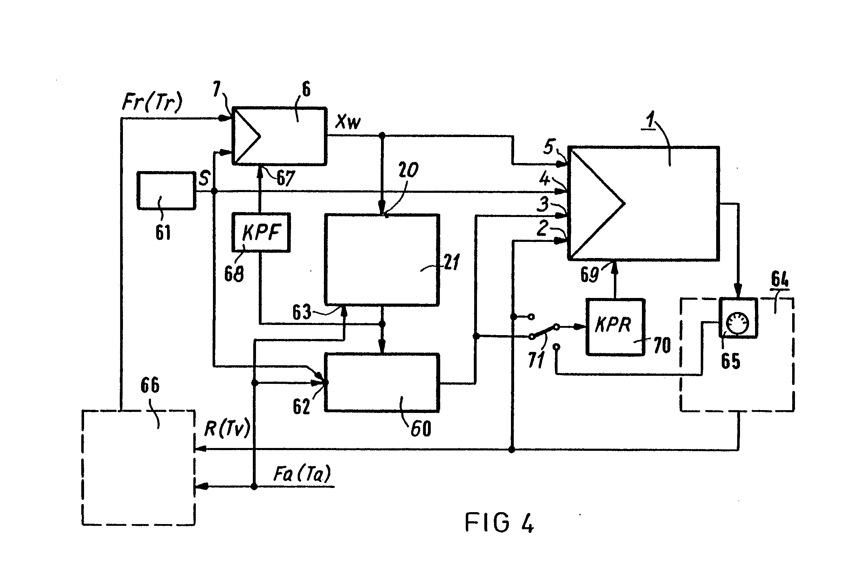

Bei der Darstellung eines weiteren Ausführungsbeispiels der Regelvorrichtung gemäß der Fig. 4 weist die elektronische Regelschaltung 1 ebenfalls die Eingänge 2, 3, 4 und 5 auf. Am Eingang 2 steht die Regelgröße an, die von der Vorlauftemperatur Tv des Heizmittels abhängig ist ; am Eingang 3 liegt eine bewertete Führungsgröße Fa (Ta) an, die am Ausgang einer Bewertungsschaltung 60 gebildet ist ; an dem Eingang 4 ist der Ausgang eines Solltemperaturgebers 61, der die Sollgröße S erzeugt, angeschlossen und der Eingang 5 ist mit dem Ausgang des Führungsreglers 6 verbunden. An einem Eingang 62 der Bewertungsschaltung 60 liegt die unbewertete eine Führungsgröße Fa an, die von der Außentemperatur Ta des Gebäudes abhängig ist ; ihr ist die Sollgröße S des Solltemperaturgebers 61 überlagert, wobei die eine Führungsgröße Fa und die Sollgröße S gemeinsam durch die Bewertungsschaltung 60 bewertet werden.

Am Ausgang des Führungsreglers 6 ist die Regeldifferenz Xw aus der Sollgröße S und der weiteren von der Innentemperatur Tr des Gebäudes abhängigen Größe Fr gebildet. Die Regeldifferenz Xw ist auch auf den Eingang 20 der anhand der Fig. 1 beschriebenen Optimierungsschaltung 21 geführt, deren Ausgangssignal zu einer Veränderung der Bewertung in der Bewertungsschaltung 60 führt.

An einen weiteren Eingang 63 der Optimierungsschaltung 21 ist die Eingangsgröße der Bewertungsschaltung 60 geführt, wodurch eine zusätzliche Beeinflussung des Ausgangssignals der Optimierungsschaltung vorgenommen wird.

Der Ausgang der elektronischen Regelschaltung 1 ist auf den Eingang einer hier symbolisch als Reglerbaustein 64 dargestellten Heizungsanlage geführt, die ein Stellglied 65, z. B. ein Mischventil für das Heizmittel der Heizungsanlage, enthält. Das Ausgangssignal dieses Reglerbausteins 64 stellt die Regel größe R in Abhängigkeit von der Vorlauftemperatur Tv dar, die auf das hier ebenfalls symbolisch als weiterer Reglerbaustein 66 dargestellte Gebäude einwirkt. Vom weiteren Reglerbaustein 66 dargestellte Gebäude einwirkt. Vom weiteren Reglerbaustein 66 ist als Ausgangssignal die weitere Größe Fr, die von der Innentemperatur Tr des Gebäudes abhängig ist, an den Eingang 7 des Führungsreglers 6 geführt.

Zur optimalen Anpassung des Übertragungsverhalten des Führungsreglers 6 ist dieser über einen zusätzlichen Eingang 67 mit dem Ausgang einer Parameteränderungsschaltung (KPF) 68 verbunden. Die Parameteränderungsschaltung (KPF) ist mit einem Eingangssignal beaufschlagt, das aus dem Ausgangssignal der Optimierungsschaltung 21 hergeleitet ist. Das Ausgangssignal der Optimierungsschaltung 21 enthält u. a. einen Optimierungsbefehl zur Veränderung der Steigung der Heizkurve, woraus die jeweils aktuelle in der Regelvorrichtung eingestellte Heizkurve hergeleitet werden kann. Abhängig von der aktuellen Heizkurve wird mittels der Parameteränderungsschaltung (KPF) 68 der Proportionalanteil der Übertragungsfunktion des Führungsreglers 6 derart verändert, daß ein Überschwingen der Ausgangsgröße, nämlich der Regeldifferenz, vermieden ist.

An einem zusätzlichen Eingang 69 der elektronischen Regelschaltung 1 ist der Ausgang einer weiteren Parameteränderungsschaltung (KPR) 70 angeschaltet ; als Eingangssignal erhält die Parameteränderungsschaltung 70 über einen Umschalter 71 entweder eine Größe, die der Verlauftemperatur Tv des Heizmittels, der bewerteten einen Führungsgröße Fa mit der überlagerten ebenfalls bewerteten Sollgröße S oder dem Stellwinkel des Stellgliedes 65 entspricht.

Somit ist sichergestellt, daß abhängig von der aktuellen Regelgröße, die von der Heizungsanlage erzeugt wird bzw. dem Stellwinkel des Stellgliedes 65 entspricht, oder auch abhängig von den bewerteten Größen am Ausgang der Bewertungsschaltung 60 das dynamische Verhalten der elektronischen Regelschaltung 1 optimal eingestellt werden kann, so daß sich eine gleichbleibende Verstärkung des Gesamtregelkreises und ein optimales dynamisches Verhalten des Regelkreises ergibt.

**Patentansprüche**

1. Regelvorrichtung für Heizungsanlagen mit
   a) einer elektronischen Regelschaltung (1), an deren
   a1) einem Eingang (2) eine von der Vorlauftemperatur (Tv) eines Heizmittels gesteuerte Regelgröße (R) anliegt, an deren
   a2) zweitem Eingang (3) eine über eine Bewertungsschaltung (24) geführte und somit bewertete, von der Außentemperatur (Ta) des die Heizungsanlage umgebenden Gebäudes abhängige Führungsgröße (Fa) anliegt,
   a3) an deren drittem Eingang (4) zur Vorgabe einer gewünschten Innentemperatur (Tr) des die Heizungsanlage umgebenden Gebäudes eine von einem Solltemperaturgeber (9) entsprechend der Solltemperatur gebildete Sollgröße (S) anliegt und
   a4) an deren Ausgang (33) eine auch von einer Solltemperatur abhängige Stellgröße zur Veränderung der Vorlauftemperatur (Tv) des Heizmittels zur Verfügung steht,
   dadurch gekennzeichnet, daß
   b) ein vierter Eingang (5) der elektronischen Regelschaltung (1) mit dem Ausgang eines Führungsreglers (6) verbunden ist, an dessen
   b1) einem Eingang (7) eine von der Innentemperatur (Tr) des die Heizungsanlage umgebenden Gebäudes beeinflußte weitere Führungsgröße (Fr) anliegt und dessen
   b2) anderer Eingang (8) mit der Sollgröße (S) beaufschlagt ist, wobei
   b3) das Ausgangssignal (Xw) des Führungsreglers (6) von der Differenz zwischen der weiteren Führungsgröße (Fr) und der Sollgröße (S) abhängig ist, daß
   c) der Ausgang des Führungsreglers (6) mit einem Eingang (20) einer Optimierungsschaltung (21) verbunden ist, deren
   c1) anderer Eingang (22) mit einem Eingang (23) der Bewertungsschaltung (24) verbunden ist, und
   c2) deren Ausgang (26) auf einen anderen Eingang (25) der Bewertungsschaltung (24) geführt ist, wobei
   d) das Signal am Ausgang (26) der Optimierungsschaltung (21) in Abhängigkeit vom Ausgangssignal (Xw) des Führungsreglers (6) und von der unbewerteten einen Führungsgröße (Fa) derart auf die Bewertungsschaltung (24) einwirkt, daß die Bewertung der einen Führungsgröße (Fa) verändert wird (Fig. 1).

2. Regelvorrichtung nach Anspruch 1, dadurch gekennzeichnet, daß
   e) die Sollgröße (S) über einen Normierungsregler (16) an den dritten Eingang (4) der Regelschaltung (1) geführt ist, wobei

e1) an einen Eingang (15) des Normierungsreglers (16) die Sollgröße (S) und am anderen Eingang (17) eine vorgegebene, einer festgelegten Innentemperatur des Gebäudes entsprechenden Größe, anliegt und

e2) am Ausgang des Normierungsreglers (16) die Sollgröße (S) in normierte Form anliegt (Fig. 1).

3. Regelvorrichtung nach Anspruch 1 oder 2, dadurch gekennzeichnet, daß

f) ein dritter Eingang (30) der Optimierungsschaltung (21) mit einer elektronischen Uhr (12) verbunden ist, die

f1) Taktimpulse an die Optimierungsschaltung (21) abgibt (Fig. 1).

4. Regelvorrichtung nach Anspruch 3, dadurch gekennzeichnet, daß

g) bei jedem Taktimpuls in der Optimierungsschaltung (21) das Ausgangssignal (Xw) des Führungsreglers (6) mit einem oberen und einem unteren Grenzwert verglichen wird und

g1) bei Überschreiten des oberen Grenzzwertes ein positives Optimierungssignal und

g2) bei Unterschreiten des unteren Grenzzwertes ein negatives Optimierungssignal in der Optimierungsschaltung (21) gebildet und gespeichert wird und daß

h) nach jeweils einer vorgegebenen Zeitspanne ein positiver oder negativer Optimierungsbefehl als Ausgangssignal der Optimierungsschaltung (21) auftritt in Abhängigkeit davon, ob die Anzahl der gespeicherten positiven oder negativen Optimierungssignale überwiegt.

5. Regelvorrichtung nach einem der Ansprüche 1 bis 4, dadurch gekennzeichnet, daß

i) die Optimierungsschaltung (21) ein Schaltungsteil aufweist, in dem

i1) nach der jeweils vorgegebenen Zeitspanne die unbewertete eine Führungsgröße (Fa) mit einem vorgegebenen Wert verglichen wird und

j) in dem, in Abhängigkeit vom Über- bzw. Unterschreiten dieses Wertes durch die unbewertete eine Führungsgröße, das Ausgangssignal der Optimierungsschaltung (21) zusätzlich beeinflußt wird.

6. Regelvorrichtung nach einem der vorhergehenden Ansprüche, dadurch gekennzeichnet, daß

k) der Solltemperaturgeber (9) eine Verstellvorrichtung (10) zur inkrementellen Bildung der Sollgröße (S) enthält (Fig. 1)

7. Regelvorrichtung nach einem der vorgehenden Ansprüche, dadurch gekennzeichnet, daß

l) der Solltemperaturgeber (9) einen Solltemperaturspeicher (11) enthält, der

l1) mit der elektronischen Uhr (12) verbunden ist und der

l2) unter mehreren Speicheradressen abgelegte Sollgrößen enthält, wobei

l2.1) die Speicheradressen vorgegeben und von der elektronischen Uhr (12) erzeugten Zeitimpulsen zugeordnet sind und

l2.2) bei Auftreten der vorgegebenen Zeitimpulse die jeweiligen unter der zugeordneten Speicheradresse abgelegten Sollgrößen am Ausgang (13) des Solltemperaturgebers (9) anstehen.

8. Regelvorrichtung nach Anspruch 6 oder 7, dadurch gekennzeichnet, daß

m) die Verstellvorrichtung (10) der Solltemperaturgebers (9) mit einem vierten Eingang (31) der Optimierungsschaltung (21) verbindbar ist, wobei

m1) die Verstellvorrichtung (10) derart auf die Optimierungsschaltung (21) einwirkt, daß bei Betätigen der Verstellvorrichtung (10) ein positiver oder negativer Befehl als Ausgangssignal der Optimierungsschaltung (21) auftritt.

9. Regelvorrichtung mit einem ersten Temperaturgeber für die Vorlauftemperatur des Heizmittels und einem zweiten Temperaturgeber für die Außentemperatur des Gebäudes nach einem der vorhergehenden Ansprüche, dadurch gekennzeichnet, daß

n) ein dritter Temperaturgeber (42) für die Innentemperatur (Tr) des die Heizungsanlage umgebenden Gebäudes vorhanden ist, daß

o) den Temperaturgebern (40, 41, 42) jeweils ein Normierungsbaustein (43, 44, 45) nachgeordnet ist und daß

p) die Normierungsbausteine (43, 44, 45) jeweils so aufgebaut sind, daß an ihrem Ausgang jeweils eine Größe ansteht, die

p1) der Abweichung der jeweiligen Eingangsgröße von einem mit der Beschaltung des Normierungsbausteins (43, 44, 45) jeweils vorgegebenen Bezugswert entspricht (Fig. 1).

10. Regelvorrichtung nach Anspruch 9, dadurch gekennzeichnet, daß

q) die Ausgänge der Normierungsbausteine mit dem Analogeingang jeweils eines Analog-Digital-Wandlers (46, 47, 48) verbunden sind, an deren Ausgängen jeweils die Regelgröße (R), die unbewerdete eine Führungsgröße (Fa) und die weitere Führungsgröße (Fr) in digitaler Form anstehen (Fig. 1).

11. Regelvorrichtung nach Anspruch 9, dadurch gekennzeichnet, daß

r) die Ausgänge der Normierungsbausteine (43, 44, 45) zusammengeschaltet sind und

r1) mit dem Analogeingang eines einzigen Analog-Digital-Wandlers (50) verbunden sind und daß

s) ein Steuereingang (53) jedes Normierungsbausteines (43, 44, 45) mit jeweils einem Ausgang eines Ansteuerbausteins (54) verbunden ist, der

s1) die Normierungsbausteine (43, 44, 45) nacheinander zu einer Abgabe ihres Ausgangssignals an den Eingang des einzigen Analog-Digital-Wandlers (50) veranlaßt, und der

s2) das Ausgangssignal des einzigen Analog-Digital-Wandlers (50) nacheinander verschiedene Anschlußleitungen zuordnet (Fig. 2).

12. Regelvorrichtung nach einem der Ansprüche 9 bis 11, dadurch gekennzeichnet, daß

t) der mit dem Temperaturgeber (40) für die Vorlauftemperatur (Tv) des Heizmittels verbundene Normierungsbaustein (43) so aufgebaut ist, daß

t1) sein Bezugswert einstellbar ist (Fig. 2).

13. Regelvorrichtung nach einem der Ansprüche 9 bis 12, dadurch gekennzeichnet, daß

u) die Normierungsbausteine (43, 44, 45) jeweils einen Operationsverstärker (51) enthalten, der

u1) einen aus einem Widerstandsnetzwerk bestehenden Rückkopplungszweig aufweist, wobei

u2) durch die Bemessung der Widerstände der Bezugswert vorgegeben bzw. einstellbar ist (Fig. 2).

14. Regelvorrichtung nach einem der Ansprüche 4 bis 12, dadurch gekennzeichnet, daß

v) die Optimierungsschaltung (21) Bestandteil eines Microcomputers ist.

15. Regelvorrichtung nach einem der vorhergehenden Ansprüche, dadurch gekennzeichnet, daß

w) die Eingänge (2, 3, 4, 5) der elektronischen Regelschaltung (1) und der Ausgang (26) der Optimierungschaltung (21) mit dem Eingang eines Speicherbausteins (49) verbunden sind, dessen

w1) Speicherinhalt auch bei Spannungsausfallerhalten bleibt (Fig. 1).

16. Regelvorrichtung nach einem der vorhergehenden Ansprüche, dadurch gekennzeichnet, daß

x) an den Ausgang (33) der elektronischen Regelschaltung (1) eine Schrittimpulsschaltung (34) angeschaltet ist, die

x1) abhängig vom Wert der Stellgröße am Ausgang (33) der Regelschaltung (1) eine Anzahl Schrittimpulse erzeugt, die

x2) eine Schrittweise Verstellung eines Stellgliedes (36) zur Veränderung der Vorlauftemperatur (Tv) des Heizmittels bewirkt (Fig. 1).

17. Regelvorrichtung nach einem der vorhergehenden Ansprüche dadurch gekennzeichnet, daß

y) der Ausgang des Solltemperaturgebers (61) mit dem Eingang (62) der Bewertungsschaltung (60) verbunden ist (Fig. 4).

18. Regelvorrichtung nach Anspruch 17, dadurch gekennzeichnet, daß

z) der Führungsregler (6) als P-Regler ausgebildet ist und daß

A) der Führungsregler (6) mit dem Ausgang einer Parameteränderungsschaltung (68) verbunden ist, die

A1) mit ihrem Eingang an den Ausgang der Optimierungsschaltung (21) angeschlossen ist, wobei

A2) die Parameteränderungsschaltung (68), abhängig vom Ausgangssignal der Optimierungsschaltung (21), ein Proportionalverhalten des Führungsreglers (6) beeinflussendes Signal erzeugt (Fig. 4).

19. Regelvorrichtung nach Anspruch 17 oder 18, dadurch gekennzeichnet, daß

B) die elektronische Regelschaltung (1) als PI-Regler ausgebildet ist und daß

C) die elektronische Regelschaltung (1) mit dem Ausgang einer weiteren Parameteränderungsschaltung (70) verbunden ist (Fig. 4).

20. Regelvorrichtung nach Anspruch 19, dadurch gekennzeichnet, daß

D) die weitere Parameteränderungsschaltung (70) mit ihrem Eingang an den Ausgang der Bewertungsschaltung (60) anschaltbar ist, wobei

D1) die weitere Parameteränderungsschaltung (70) abhängig vom Ausgangssignal der Bewertungsschaltung (60), ein das Proportionalverhalten der elektronischen Regelschaltung (1) beeinflussendes Signal erzeugt.

21. Regelvorrichtung nach Anspruch 19, dadurch gekennzeichnet, daß

E) die weitere Parameteränderungsschaltung (70) mit ihrem Eingang an eine die Regelgröße führende Leitung anschaltbar ist, wobei

E1) die weitere Parameteränderungsschaltung (70) abhängig von dem Wert der Regelgröße ein das Proportionalverhalten der elektronischen Regelschaltung (1) beeinflussendes Signal abgibt.

22. Regelvorrichtung nach Anspruch 19, dadurch gekennzeichnet, daß

F) die weitere Parameteränderungsschaltung (70) an ihrem Eingang mit einer Größe beaufschlagt ist, die dem Stellwinkel eines zur Heizungsanlage (64) gehörenden Stellgliedes (65) proportional ist, wobei

F1) die weitere Parameteränderungsschaltung (70) abhängig von der dem Stellwinkel proportionalen Größe ein das Proportionalverhalten der elektronischen Regelschaltung (1) beeinflussendes Signal erzeugt.

**Claims**

1. A regulating device for heating installations with

a) an electronic regulating circuit (1) whose

a1) first input (2) is connected to a regulating variable (R) which is controlled by the flow temperature (Tv) of a heating means and whose

a2) second input (3) is connected to a command variable (Fa) which is conducted via an evaluation circuit (24) and is thus evaluated, and which is dependent upon the external temperature (Ta) of the building which surrounds the heating installation,

a3) whose third input (4) — for the predetermination of a desired inside temperature (Tr) of the building which surrounds the heating installation — is connected to a theoretical value which is formed by a theoretical temperature indicator (9) in accordance with the theoretical temperature and

a4) at whose output (33) a correcting variable is available which is dependent upon a theoretical temperature and which serves to change the flow temperature (Tv) of the heating means, characterised in that

b) a fourth input (5) of the electronic regulating circuit (1) is connected to the output of a command regulator (6), whose

b1) first input (7) is connected to a further command variable (Fr) which is influenced by the inside temperature (Tr) of the building which surrounds the heating installation and whose

b2) other input (8) is acted upon by the theoretical value (S), where

b3) the output signal (Xw) of the command regulator (6) is dependent upon the difference between the further command variable (Fr) and the theoretical value (S), that

c) the output of the command regulator (6) is connected to an input (20) of an optimisation circuit (21), whose

c1) other input (22) is connected to an input (23) of the evaluation circuit (24) and

c2) whose output (26) leads to another input (25) of the evaluation circuit (24), where

d) the signal at the output (26) of the optimisation circuit (21) acts upon the evaluation circuit (24), in dependence upon the output signal (Xw) of the command regulator (6) and in dependence upon the non-evaluated first command variable (Fa), in such manner that the evaluation of the first command variable (Fa) is changed (Fig. 1).

2. A regulating device as claimed in claim 1, characterised in that

e) the theoretical value (F) is fed via a standardising regulator (16) to the third input (4) of the regulating circuit (1), where

e1) an input (15) of the standardising regulator (16) is connected to the theoretical value (S) and the other input (17) is connected to a predetermined value corresponding to a predetermined inside temperature of the building and

e2) the theoretical value (S) is applied, in standardised form, to the output of the standardising regulator (16) (Fig. 1).

3. A regulating device as claimed in claim 1 or 2, characterised in that

f) a third input (30) of the optimisation circuit (21) is connected to an electronic clock (12) which

f1) emits clock pulses to the optimisation circuit (21) (Fig. 1).

4. A regulating device as claimed in claim 3, characterised in that

g) with each clock pulse in the optimisation circuit (21), the output signal (Xw) of the command regulator (6) is compared with an upper and a lower limit value and

g1) when the upper limit value is overshot a positive optimisation signal is formed and stored in the optimisation circuit (21) and

g2) when the lower limit value is undershot a negative optimisation signal is formed and stored in the optimisation circuit (21) and that

h) following a predetermined period of time a positive or negative optimisation command occurs as output signal of the optimisation circuit (21) in dependence upon whether the number of stored positive or negative optimisation signals predominates.

5. A regulating device as claimed in one of the claims 1 to 4, characterised in that

i) The optimisation circuit (21) has a circuit component in which

i1) following the predetermined period of time the non-evaluated first command variable (Fa) is compared with a predetermined value and

j) in which, in dependence upon the overshooting or undershooting of this value by the non-evaluated first command variable, the output signal of the optimisation circuit (21) is additionally influenced.

6. A regulating device as claimed in one of the preceding claims, characterised in that

k) the theoretical temperature indicator (9) includes an adjusting device (10) for the incremental formation of the theoretical value (S) (Fig. 1).

7. A regulating device as claimed in one of the preceding claims, characterised in that

1) the theoretical temperature indicator (9) includes a theoretical temperature store (11) which

11) is connected to the electronic clock (12) and which

12) contains theoretical values stored under a plurality of store addresses, where

12.1) the store addresses are predetermined and are assigned to time pulses produced by the electronic clock (12) and

12.2) on the occurrence of the predetermined time pulses, the theoretical values which are each stored under the assigned store address occur at the output (13) of the theoretical temperature indicator (9).

8. A regulating device as claimed in claim 6 or 7, characterised that

m) the adjusting device (10) of the theoretical temperature indicator (9) can be connected to a fourth input (31) of the optimisation circuit (21), where

m1) the adjusting device (10) acts upon the optimisation circuit (21) in such manner that when the adjusting device (10) is actuated, a positive or negative command occurs as output signal of the optimisation circuit (21).

9. A regulating device with a first temperature indicator for the flow temperature of the heating means and with a second temperature indicator for the external temperature of the building, as claimed in one of the preceding claims, characterised in that

n) a third temperature indicator (42) is provided for the inside temperature (Tr) of the building which surrounds the heating installation, that

o) the temperature indicators (40, 41, 42) are each followed by a standardising module (43, 44, 45) and that

p) the standardising modules (43, 44, 45) are each constructed in such manner that at each or their outputs there occurs a value which

p1) corresponds to the deviation of the relevant input value from a reference value which is predetermined by means of the wiring of the standardising module (43, 44, 45) (Fig. 1).

10. A regulating device as claimed in claim 9, characterised in that

q) the outputs of the standardising modules are each connected to the analogue input of an analogue-digital converter (46, 47, 48) at whose outputs the regulating variable (R), the non-evaluated first command variable (Fa) and the further command variable (Fr) each occur in digital form (Fig. 1).

11. A regulating device as claimed in claim 9, characterised in that

r) the outputs of the standardising modules (43, 44, 45) are interconnected and

r1) are connected to the analogue input of one single analogue-digital converter (50) and that

s) a control input (53) of each standardising module (43, 44, 45) is in each case connected to an input of a drive module (54) which

s1) causes the standardising modules (43, 44, 45) in turn to emit their output signal to the input of the one analogue-digital converter (50) and which

s2) assigns the output signal of the one analogue-digital converter (50) in turn to various connection lines (Fig. 2).

12. A regulating device as claimed in one of the claims 9 to 11, characterised in that

t) the standardising module (43), which is connected to the temperature indicator (40) for the flow temperature (Tv) of the heating means, is constructed in such manner that

t1) its reference value is adjustable (Fig. 2).

13. A regulating device as claimed in one of the claims 9 to 12, characterised in that

u) the standardising modules (43, 44, 45) each include an operational amplifier (51) which

u1) has a feedback arm comprising a resistance network where

u2) the reference value is predetermined or adjustable by virtue of the dimensioning of the resistances (Fig. 2).

14. A regulating device as claimed in one of the claims 4 to 12, characterised in that

v) the optimisation circuit (21) forms part of a microcomputer.

15. A regulating device as claimed in one of the preceding claims, characterised in that

w) the inputs (2, 3, 4, 5) of the electronic regulating circuit (1) and the output (26) of the optimisation circuit (21) are connected to the input of a storage module (49) whose

w1) store content is retained even in the event of a voltage failure (Fig. 1).

16. A regulating device as claimed in one of the preceding claims, characterised in that

x) the output (33) of the electronic regulating circuit (1) is connected to a step pulse circuit (34) which

x1) in dependence upon the value of the control variable at the output (33) of the regulating circuit (1) produces a number of step pulses which

x2) effects a stepped adjustment of a control element (36) which serves to change the flow temperature (Tv) of the heating means (Fig. 1).

17. A regulating device as claimed in one of the preceding claims, characterised in that

y) the output of the theoretical temperature indicator (61) is connected to the input (62) of the evaluating circuit (60) (Fig. 4).

18. A regulating device as claimed in claim 17, characterised in that

z) the command regulator (6) is designed as a P-regulator and that

A) the command regulator (6) is connected to the output of a parameter-change circuit (68) which

A1) is connected by its input to the output of the optimisation circuit (21), where

A2) in dependence upon the output signal of the optimisation circuit (21), the paramater-change circuit (68) produces a signal which influences the proportional behaviour of the command regulator (6) (Fig. 4).

19. A regulating device as claimed in claim 17 or 18, characterised in that

B) the electronic regulating circuit (1) is designed as a PI-regulator and that

C) the electronic regulating circuit (1) is connected to the output of a further parameter-change circuit (70) (Fig. 4).

20. A regulating device as claimed in claim 19, characterised in that

D) the further parameter-change circuit (70) can be connected by its input to the output of the evaluation circuit (60), where

D1) in dependence upon the output signal of the evaluation circuit (60), the further parameter-change circuit (70) produces a signal which influences the proportional behaviour of the electronic regulating circuit (1).

21. A regulating device as claimed in claim 19, characterised in that

E) the further parameter-change circuit (70) can be connected by its input to a line which conducts the regulating variable where

E1) in dependence upon the value of the regulating variable, the further parameter-change circuit (70) emits a signal which influences the proportional behaviour of the electronic regulating circuit (1).

22. A regulating device as claimed in claim 19, characterised in that

F) the further parameter-change circuit (70) is acted upon at its input by a value which is proportional to the control angle of a control element (65) assigned to the heating installation (64), where

F1) in dependence upon the value which is proportional to the control angle, the further parameter-change circuit (70) produces a signale which influences the proportional behaviour of the electronic regulating circuit (1).

## Revendications

1. Dispositif de régulation pour installations de chauffage, comprenant

a) un montage de régulation électronique (1)

a1) à une première entrée (2) duquel est appliquée une grandeur réglée (R) commandée par la température aller (Tv) d'un fluide de chauffage,

a2) à la deuxième entrée (3) duquel est appliquée une grandeur de commande (Fa) qui dépend du bâtiment entourant l'installation de chauffage et qui a été passée par un circuit de pondération (24), de sorte qu'elle est pondérée,

a3) à la troisième entrée (4) duquel est appliquée une grandeur de consigne (S) formée par un générateur de température de consigne (9) conformément à la température de consigne, en vue de la fixation préalable d'une température intérieure désirée (Tr) du bâtiment entourant l'installation de chauffage, et

a4) à la sortie (33) duquel est présentée une variable réglante, qui dépend également d'une température de consigne, pour le changement de la température aller (Tv) du fluide de chauffage, caractérisé en ce que,

b) une quatrième entrée (5) du montage de régulation électronique (1) est reliée à la sortie d'un organe directeur (6),

b1) à une entrée (7) duquel est appliquée une grandeur de commande supplémentaire (Fr) influencée par la température intérieure (Tr) du bâtiment entourant l'installation de chauffage.

b2) et à l'autre entrée (8) duquel est appliquée la grandeur de consigne (S),

b3) le signal de sortie (Xw) de l'organe directeur (6) dépendant de la différence entre la grandeur de commande supplémentaire (Fr) et la grandeur de consigne (S),

c) que la sortie de l'organe directeur (6) est reliée à une entrée (20) d'un circuit d'optimisation (21),

c1) dont l'autre entrée (22) est reliée à une entrée (23) du circuit de pondération (24) et

c2) dont la sortie (26) est reliée à une autre entrée (25) du circuit de pondération (24),

d) le signal à la sortie (26) du circuit d'optimisation (21) agissant de telle manière sur le circuit de pondération (24), en fonction du signal de sortie (Xw) de l'organe directeur (6) et de la première grandeur de commande non pondérée (Fa), que la pondération de la première grandeur de commande (Fa) est changée (figure 1).

2. Dispositif de régulation selon la revendication 1, caractérisé en ce que

e) la grandeur de consigne (S) est appliquée à travers un régulateur de standardisation (16) à la troisième entrée (4) du montage de régulation (1),

e1) avec application de la grandeur de consigne (S) à une entrée (15) du régulateur de standardisation (16) et avec application à l'autre entrée (17) d'une grandeur préfixée correspondant à une température intérieure fixée du bâtiment et

e2) présentation à la sortie du régulateur de standardisation (16) de la grandeur de consigne (S) sous forme standardisée (figure 1).

3. Dispositif de régulation selon la revendication 1 ou 2, caractérisé en ce que

f) une troisième entrée (30) du circuit d'optimisation (21) est reliée à une horloge électronique (12) qui

f1) délivre des impulsions de rythme au circuit d'optimisation (21) (figure 1).

4. Dispositif de régulation selon la revendication 3, caractérisé en ce que

g) à chaque impulsion de rythme, le signal de sortie (Xw) de l'organe directeur (6) est comparé dans le circuit d'optimisation (21) avec une valeur limite supérieure et une valeur limite inférieure et

g1) en cas de dépassement de la valeur limite supérieure, un signal d'optimisation positif est formé dans le circuit d'optimisation (21) et est mémorisé et

g2) en cas de descente au-dessous de la valeur limite inférieure, un signal d'optimisation négatif est produit dans le circuit d'optimisation (21) et est mémorisé, et en ce que

h) après un intervalle de temps préfixé, une instruction d'optimisation positive ou négative est produite chaque fois en tant que signal de sortie du circuit d'optimisation (21), suivant que le nombre des signaux d'optimisation positifs ou négatifs domine.

5. Dispositif de régulation selon une des revendications 1 à 4, caractérisé en ce que

i) le circuit d'optimisation (21) présente une partie de circuit dans lequel

i1) après l'intervalle de temps préfixé, la grandeur de commande non pondérée (Fa) est comparée chaque fois avec une valeur préfixée et

j) dans lequel, en fonction du dépassement de cette valeur par la première grandeur de commande non pondérée, ou de la descente de cette grandeur de commande au-dessous de ladite valeur, le signal de sortie du circuit d'optimisation (21) est soumis à une influence supplémentaire.

6. Dispositif de régulation selon une des revendications précédentes, caractérisé en ce que

k) le générateur de température de consigne (9) contient un dispositif de réglage (10) pour la formation incrémentielle de la grandeur de consigne (S) (figure 1).

7. Dispositif de régulation selon une des revendications précédentes, caractérisé en ce que

l) le générateur de température de consigne (9) contient une mémoire de températures de consigne (11) qui

l1) est reliée à l'horloge électronique (12) et

l2) qui contient plusieurs grandeurs de consigne mémorisées à différentes adresses de mémoire,

l2.1) les adresses de mémoire étant préfixées et associées à des impulsions de temps produites par l'horloge électronique (12) et

12.2) en cas d'apparition des impulsions de temps préfixées, les grandeurs de consigne mémorisées sous l'adresse de mémoire associée sont présentées à la sortie (13) du générateur de température de consigne (9).

8. Dispositif de régulation selon la revendication 6 ou 7, caractérisé en ce que

m) le dispositif de réglage (10) du générateur de température de consigne (9) peut être relié à une quatrième entrée (31) du circuit d'optimisation (21),

m1) le dispositif de réglage (10) agissant de telle manière sur le circuit d'optimisation (21) que lorsque le dispositif de réglage (10) est manœuvré, une instruction positive ou négative apparaît sous forme d'un signal de sortie du circuit d'optimisation (21).

9. Dispositif de régulation comprenant un premier capteur de température pour la température aller du fluide de chauffage et un deuxième capteur de température pour la température à l'extérieur du bâtiment, selon une des revendications précédentes, caractérisé en ce que

n) un troisième capteur de température (42) est prévu pour la température intérieure (Tr) du bâtiment entourant l'installation de chauffage,

o) qu'un élément de standardisation (43, 44, 45) est prévu à la suite de chaque capteur de température (40, 41, 42) et que

p) les éléments de standardisation (43, 44, 45) sont conçus chacun de manière qu'à leur sortie apparaisse chaque fois une grandeur qui

p1) correspond à l'écart de la grandeur d'entrée concernée par rapport à une valeur de référence préfixée par la réalisation du circuit de l'élément de standardisation (43, 44, 45) en question (figure 1).

10. Dispositif de régulation selon la revendication 9, caractérisé en ce que

q) les sorties des éléments de standardisation sont reliées chacune à l'entrée analogique d'un convertisseur analogique-numérique (46, 47, 48), les sorties des convertisseurs analogiques-numériques présentant respectivement la grandeur réglante (R), la première grandeur de commande non pondérée (Fa) et la grandeur de commande supplémentaire (Fr) sous forme numérique (figure 1).

11. Dispositif de régulation selon la revendication 9, caractérisé en ce que

r) les sorties des éléments de standardisation (43, 44, 45) sont reliées ensemble et

r1) sont reliées à l'entrée analogique d'un seul convertisseur analogique-numérique (50) et que

s) une entrée de commande (53) de chaque élément de standardisation (43, 44, 45) est reliée chaque fois à une sortie d'un élément d'attaque (54) qui

s1) amène les éléments de standardisation (43, 44, 45) l'un après l'autre à délivrer leur signal de sortie à l'entrée du convertisseur analogique-numérique (50) unique et qui

s2) applique le signal de sortie du convertisseur analogique-numérique (50) unique successivement à différentes lignes de raccordement (figure 2).

12. Dispositif de régulation selon une des revendications 9 à 11, caractérisé en ce que

t) l'élément de standardisation (43) relié au capteur de température (40) pour la température aller (Tv) du fluide de chauffage est réalisé de manière que

t1) sa valeur de référence soit réglable (figure 2).

13. Dispositif de régulation selon une des revendications 1 à 12, caractérisé en ce que

u) les éléments de standardisation (43, 44, 45) contiennent chacun un amplificateur opérationnel (51) qui

u1) présente une branche de rétroaction formée d'un réseau de résistances,

u2) la valeur de référence étant préfixée ou réglable par le choix des résistances (figure 2).

14. Dispositif de régulation selon une des revendications 4 à 12, caractérisé en ce que

v) le circuit d'optimisation (21) fait partie d'un micro-ordinateur.

15. Dispositif selon une des revendications précédentes, caractérisé en ce que

w) les entrées (2, 3, 4, 5) du montage de régulation électronique (1) et la sortie (26) du circuit d'optimisation (21) sont reliées à l'entrée d'un élément de mémoire (49),

w1) dont le contenu est également préservé en cas de disparition de la tension (figure 1).

16. Dispositif selon une des revendications précédentes, caractérisé en ce que

x) la sortie (33) du montage de régulation électronique (1) est reliée à un circuit d'impulsions de pas (34) qui

x1) en fonction de la valeur de la variable réglante à la sortie (33) du montage de régulation (1), produit un certain nombre d'impulsions de pas, ce qui

x2) produit un réglage pas à pas d'un organe final (36) pour la variation de la température aller (TV) du fluide de chauffage (figure 1).

17. Dispositif de régulation selon une des revendications précédentes, caractérisé en ce que

y) la sortie du générateur de température de consigne (61) est reliée à l'entrée (62) du circuit de pondération (60) (figure 4).

18. Dispositif de régulation selon la revendication 17, caractérisé en ce que

z) l'organe directeur (6) est réalisé comme un régulateur proportionnel et que

A) l'organe directeur (6) est relié à la sortie d'un circuit de changement de paramètres (68) qui

A1) est relié par son entrée à la sortie du circuit d'optimisation (21),

A2) le circuit de changement de paramètres (68) produisant, en fonction du signal de sortie du circuit d'optimisation (21), un signal qui influence le comportement proportionnel de l'organe directeur (6) (figure 4).

19. Dispositif de régulation selon la revendication 17 ou 18, caractérisé en ce que

B) le montage de régulation électronique (1) est réalisé comme un régulateur proportionnel et intégral et que

C) le montage de régulation électronique (1) est relié à la sortie d'un circuit supplémentaire de changement de paramètres (70) (figure 4).

20. Dispositif de régulation selon la revendication 19, caractérisé en ce que

D) le circuit supplémentaire de changement de paramètres (70) peut être relié par son entrée à la sortie du circuit de pondération (60),

D1) le circuit supplémentaire de changement de paramètres (70) produisant un signal qui, en fonction du signal de sortie du circuit de pondération (60), influence le comportement proportionnel du montage de régulation électronique (1).

21. Dispositif de régulation selon la revendication 19, caractérisé en ce que

E) le circuit supplémentaire de changement de paramètres (70) peut être relié par son entrée à une ligne à laquelle est appliquée la grandeur réglée,

E1) le circuit supplémentaire de changement de paramètres (70) délivrant un signal qui, en fonction de la valeur de la grandeur réglée, influence le comportement proportionnel du montage de régulation électronique (1).

22. Dispositif de régulation selon la revendication 19, caractérisé en ce que

F) le circuit supplémentaire de changement de paramètres (70) reçoit à son entrée une grandeur qui est proportionnelle à l'angle de réglage d'un organe final (65) faisant partie de l'installation de chauffage (64),

F1) le circuit supplémentaire de changement de paramètres (70) produisant un signal qui, en fonction de la grandeur proportionnelle à l'angle de réglage, influence le comportement proportionnel du montage de régulation électronique (1).

FIG 1

0 060 801

FIG 2

0 060 801

## FIG 3

FIG 4